# EUROPEAN PATENT SPECIFICATION

(11) **EP 3 413 689 B1**
(45) Date of publication and mention of the grant of the patent: **15.09.2021**
(21) Application number: 17181577.2
(22) Date of filing: 17.07.2017
(51) Int. Cl.: H05B 6/12

(54) **CONNECTION ELEMENT FOR CONNECTING A HEATING ENERGY GENERATING ELEMENT TO A CARRIER ELEMENT OF A COOKING HOB**
VERBINDUNGSELEMENT ZUM ANSCHLUSS EINES HEIZENERGIEERZEUGUNGSELEMENTS AN EIN TRÄGERELEMENT EINES KOCHFELDS
ÉLÉMENT DE CONNEXION DESTINÉ À CONNECTER UN ÉLÉMENT DE GÉNÉRATION D'ÉNERGIE DE CHAUFFAGE SUR UN ÉLÉMENT PORTEUR D'UNE PLAQUE DE CUISSON

(30) Priority: 09.06.2017 EP 17175262
(43) Date of publication of application: 12.12.2018
(73) Proprietor: ELECTROLUX APPLIANCES AKTIEBOLAG, 105 45 Stockholm (SE)
(72) Inventor: ROSSATO, Agostino, 47100 Forli (IT); BANZATO, Massimo, 47100 Forli (IT); JEANNETEAU, Laurent, 47100 Forli (IT); MILANESI, Filippo, 47122 Forli (IT); PAOLINI, Claudio, 47100 Forli (IT); NEUKAMM, Alwin, 91541 Rothenburg ob der Tauber (DE); VERDOLIVA, Valerio, 47122 Forli (IT)
(74) Representative: Electrolux Group Patents

(56) References cited:
- EP-A1- 2 079 275
- EP-A1- 2 775 785
- DE-A1- 10 306 813
- FR-A1- 2 517 769
- US-A- 3 777 052

## Description

The present invention relates to a connecting element for connecting a heating energy generating element to a carrier element of a cooking hob according to the preamble of claim 1. In particular, the present invention relates to a connecting element for connecting an induction coil to a coil carrier of an induction cooking hob. Further, the present invention relates to a cooking hob with at least one heating energy generating element and at least one carrier element. In particular, the present invention relates to an induction cooking hob with at least one induction coil and at least one coil carrier.

The fastening of an induction coil on a coil carrier of an induction cooking hob requires usually several elements. For example, a metal spring element is arranged between the induction coil and the coil carrier in order to push said induction coil towards a cooking panel arranged on the top side of the induction cooking hob. Further, at least one fastening element is provided for connecting the induction coil, the coil carrier and/or the spring element.

FR 2 517 769 discloses a connecting element for connecting a plate to a chassis, wherein said plate is arrangeable in a predetermined distance from the chassis. A first snap-fit portion is connectable to a cut-out in the plate. The connecting element includes support elements and spring elements providing the distance between the plate and the chassis. The support elements may be aligned at the plate, while the spring elements may be aligned at the chassis.

US 3,777,052 discloses a support element for fastening a circuit board on a chassis. A snap-fit portion is connectable to a cut-out in the circuit board. A further snap-fit portion is connectable to a cut-out in the chassis.

DE 103 06 813 A1 discloses a connecting element for connecting a heating element to a frame of a cooking hob by a metal bracket.

EP 2 775 785 A1 discloses a support element for supporting a coil carrier plate on a cooktop plate. The support element is made of an elastic and electrically insulating material. The support element engages with the coil carrier plate by a snap-in mechanism. Further, the support element rests on the cooktop plate.

EP 2 079 275 A1 discloses a fastening element for fastening a coil carrier at an assembly frame. The fastening element includes a screw thread for turning in a hole of the assembly frame.

It is an object of the present invention to provide a connecting element for connecting a heating energy generating element to a carrier element of a cooking hob, which allows a reliable connection between the heating energy generating element and the carrier element by low complexity.

This and other objects are achieved by the connecting element according to claim 1.

According to the present invention the spring portion is funnel-shaped, wherein the diameter of the funnel-shaped spring portion increases with the distances from the engagement portion.

According to the present invention it is particularly advantageous that the connecting element including the engagement portion. Said engagement portion may be easily connected to the receiving portion of the heating energy generating element and/or the carrier element.

In a preferred embodiment, the connecting element is provided for an induction cooking hob. Accordingly, it is preferred that the heating energy generating element is an induction coil. Additionally or alternatively, the carrier element is a heating energy generating element carrier, particularly an induction coil carrier.

Preferably, the connecting element is provided for an induction cooking hob, wherein the heating energy generating element is an induction coil, while the carrier element is a coil carrier.

Preferably, the engagement portion is a snap-fit portion.

Further, the receiving portion may be a cut-out, wherein preferably the snap-fit portion and the cut-out form a snap-in mechanism.

Moreover, the connecting element may be made of an elastic and/or insulating material.

In particular, the connecting element is formed as a single-piece part.

The connecting element includes a spring portion arrangeable between the heating energy-generating element and the carrier element, so that the spring portion provides a distance between the heating energy-generating element and the carrier element.

Further, the connecting element may include at least one groove enclosing at least partially the connecting element, wherein preferably the at least one groove is arranged between the engagement portion and the spring portion.

Additionally, the groove is engageable with the receiving portion of the heating energy generating element, in particular with the cut-out of the heating energy generating element.

Preferably, the elastic and/or insulating material is selected from the group of plastic, silicone and rubber.

According to one embodiment the diameter of the funnel-shaped spring portion increases with the distances from the snap-fit portion and the groove.

For example, the engagement portion, e.g. the snap-fit portion, is formed as a truncated pyramid.

Further, the connecting element may include at least one through hole, wherein the axis of said through hole extends perpendicular to the groove.

Preferably, the through hole is adapted for receiving an element of the carrier element, in particular an elongated element of the carrier element extending perpendicular to a plane of said carrier element.

According to another embodiment the connecting element includes a further engagement portion extending opposite to the engagement portion, wherein preferably said further engagement portion is connectable to a receiving portion of the carrier element.

For example, the further engagement portion is a further snap-fit portion, while the receiving portion of the carrier element is a cut-out, so that the further snap-fit portion and the cut-out form a snap-in mechanism.

Alternatively, the spring portion includes at least two wings arranged at opposite sides, wherein said wings extend outwards and away from the engagement portion.

Further, the connecting element may be formed as a profile section and includes two parallel grooves, wherein the profile axis extends parallel to said grooves.

Moreover, the engagement portion may include a clearance hole extending parallel to the profile axis.

Further, the present invention relates to a cooking hob with at least one heating energy generating element and at least one carrier element, in particular an induction cooking hob with at least one induction coil and at least one coil carrier, wherein the cooking hob comprises at least one connecting element mentioned above.

In particular, the heating energy generating element includes a plurality of receiving portions, e.g. cut-outs, adapted for receiving the engagement portion, e.g. the snap-fit portion, wherein said receiving portion is engaged or engageable with the groove.

Additionally, the carrier element may include a plurality of receiving portions, e.g. cut-outs, adapted for receiving the further engagement portion, e.g. the further snap-fit portion.

Alternatively, the carrier element includes a plurality of bent sheet metal fingers, wherein said bent sheet metal fingers are penetrable into or penetrate the through hole of the connecting element.

Furthermore, the cooking hob comprises at least one, preferably at least three connecting elements per cooking hob. Particularly it is preferred that the cooking hob comprises at least one heating energy generating element with at least one, preferably at least three connecting elements per the heating energy generating element. Additionally or alternatively, it is also preferred that the cooking hob comprises a carrier element with at least one, preferably at least three connecting elements per the carrier element.

For example, the cooking hob comprises a carrier element for one heating energy generating element, wherein preferably the carrier element includes three connecting elements.

According to another example, the cooking hob comprises a carrier element with two heating energy generating elements, wherein preferably the carrier element includes four connecting elements.

According to still another example, the cooking hob comprises a carrier element with four heating energy generating elements per the carrier element, wherein preferably the carrier element includes three, preferably four, connecting elements.

Novel and inventive features of the present invention are set forth in the appended claims.

The present invention will be described in further detail with reference to the drawing, in which
- FIG 1: illustrates a schematic perspective view of a connecting element according to a first embodiment of the present invention,
- FIG 2: illustrates a further schematic perspective view of the connecting element according to the first embodiment of the present invention,
- FIG 3: illustrates a schematic bottom view of the connecting element according to the first embodiment of the present invention,
- FIG 4: illustrates a schematic sectional side view of the connecting element according to the first embodiment of the present invention,
- FIG 5: illustrates a schematic sectional front view of the connecting element according to the first embodiment of the present invention,
- FIG 6: illustrates a schematic perspective view of the connecting element according to a second embodiment of the present invention,
- FIG 7: illustrates a schematic bottom view of the connecting element according to the second embodiment of the present invention,
- FIG 8: illustrates a schematic sectional side view of the connecting element according to the second embodiment of the present invention,
- FIG 9: illustrates a schematic sectional front view of the connecting element according to the second embodiment of the present invention,
- FIG 10: illustrates a schematic perspective view of the connecting element according to a third embodiment of the present invention,
- FIG 11: illustrates a schematic front view of the connecting element according to the third embodiment of the present invention,
- FIG 12: illustrates a schematic front view of the connecting element according to a fourth embodiment of the present invention,
- FIG 13: illustrates a schematic front view of the connecting element according to a fifth embodiment of the present invention,
- FIG 14: illustrates a schematic perspective view of the connecting element interconnected between an induction coil and a coil carrier according to the first embodiment of the present invention,
- FIG 15: illustrates a schematic perspective sectional view of the connecting element interconnected between the induction coil and the coil carrier according to the first embodiment of the present invention,
- FIG 16: illustrates a schematic perspective view of the connecting element interconnected between the induction coil and the coil carrier according to the third embodiment of the present invention, and
- FIG 17: illustrates a schematic perspective sectional view of the connecting element interconnected between the induction coil and the coil carrier according to the third embodiment of the present invention.

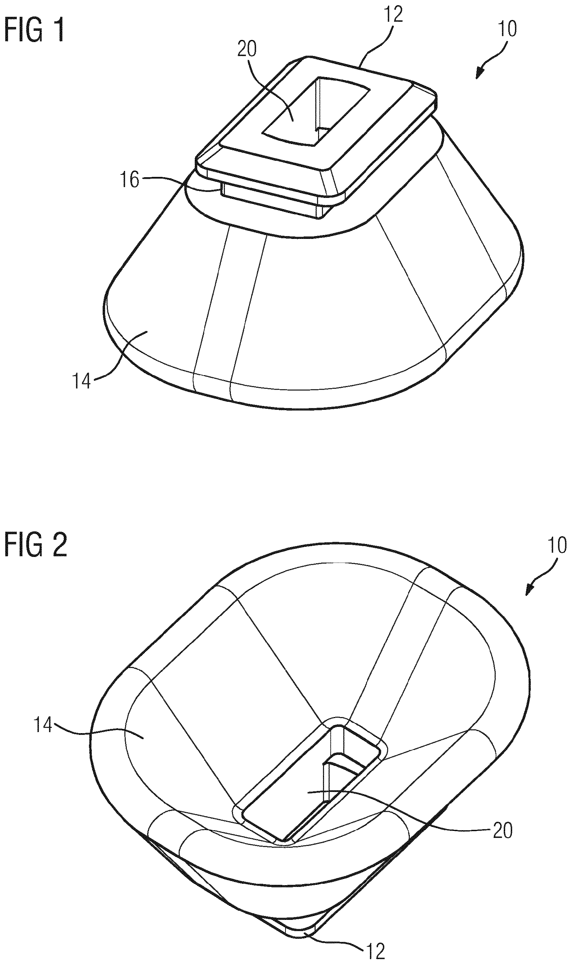

FIG 1 illustrates a schematic perspective view of a connecting element 10 according to a first embodiment of the present invention. The connecting element 10 is made of an elastic material and/or insulating material. Preferably, the connecting element 10 is made of plastic, silicone or rubber.

The connecting element 10 includes a snap-fit portion 12 and a spring portion 14. The snap-fit portion 12 is substantially formed as a truncated pyramid, while the spring portion 14 is substantially funnel-shaped. A groove 16 is formed between the snap-fit portion 12 and the spring portion 14. In this example, the groove 16 encloses completely the connecting element 10. The cross-section of the snap-fit portion 12 decreases with the distance from the groove 16. The diameter of the funnel-shaped spring portion 14 increases with the distance from the groove 16. Further, the connecting element 10 includes a through hole 20. The axis of said through hole 20 extends perpendicular to the groove 16.

In this example, the connecting element 10 is provided for connecting an induction coil 24 to a coil carrier 26 of an induction cooking hob, wherein the opening of the funnel-shaped spring portion 14 is aligned on the coil carrier 26. In general, the connecting element is provided for connecting a heating energy generating element 24 to a carrier element 26 of a cooking hob. Usually, the coil carrier 26 is a horizontal sheet of the induction cooking hob. The snap-fit portion 12 is penetrable into a cut-out of the induction coil 24. Preferably, said cut-out is rectangular. For example, the cut-out is formed in an aluminium sheet of the induction coil 24. The groove 16 of the connecting element 10 is engaged or engageable with the cut-out of the induction coil 24.

FIG 2 illustrates a further schematic perspective view of the connecting element 10 according to the first embodiment of the present invention. FIG 2 clarifies the funnel-shaped structure of the spring portion 14. The elastic material of the connecting element 10 on the one hand and the funnel-shaped spring portion 14 on the other hand allow resilient properties of said spring portion 14.

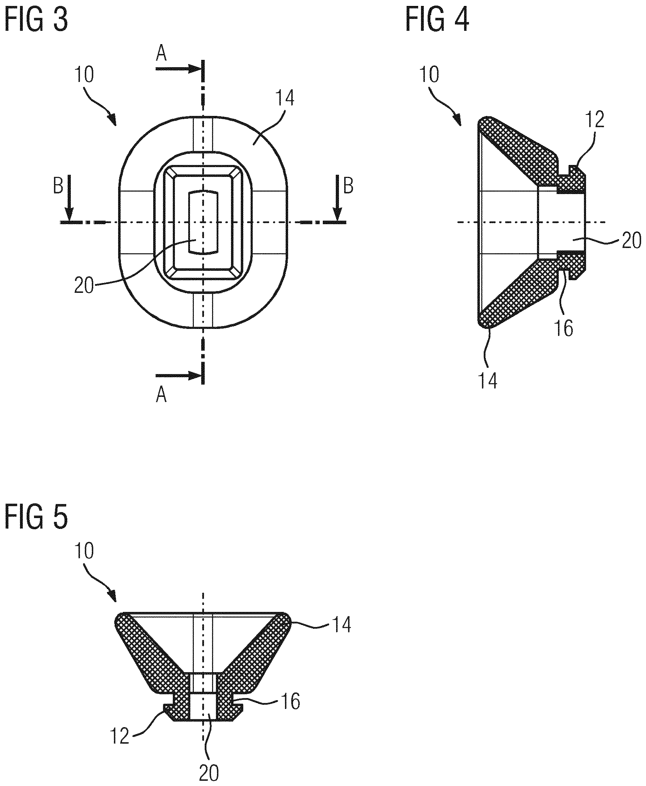

FIG 3 illustrates a schematic bottom view of the connecting element 10 according to the first embodiment of the present invention. FIG 2 clarifies the cross-section of the through hole 20 and the structure of the spring portion 14.

FIG 4 and FIG 5 illustrate schematic sectional views of the connecting element 10 according to the first embodiment of the present invention. FIG 4 and FIG 5 clarify the shapes of the snap-fit portion 12, the spring portion 14 and the groove 16. The snap-fit portion 12 forms the truncated pyramid and the spring portion 14 is substantially funnel-shaped. The groove 16 extends between said snap-fit portion 12 and spring portion 14 and encloses completely the connecting element 10. The groove 16 extends perpendicular to the axis of the through hole 20.

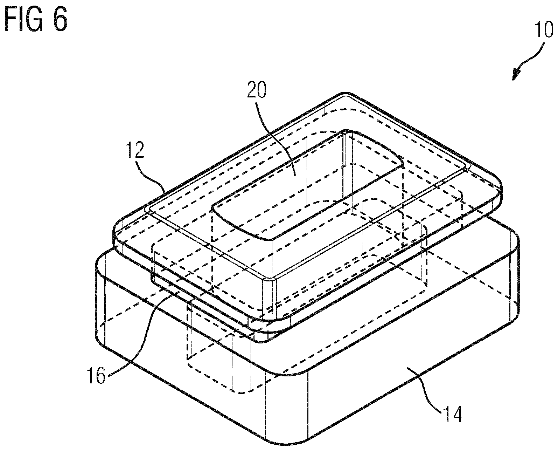

FIG 6 illustrates a schematic perspective view of the connecting element 10 according to a second embodiment of the present invention. The connecting element 10 is made of an elastic material, preferably of silicone or rubber.

The connecting element 10 includes the snap-fit portion 12 and the spring portion 14. The snap-fit portion 12 is substantially formed as the truncated pyramid. The spring portion 14 is formed as a hollow cuboid with open top and bottom sides. The groove 16 is formed between the snap-fit portion 12 and the spring portion 14 and encloses completely the connecting element 10. The cross-section of the snap-fit portion 12 decreases with the distance of said snap-fit portion 12 from the groove 16. The connecting element 10 includes the through hole 20, wherein the axis of said through hole 20 extends perpendicular to the groove 16.

The connecting element 10 of the second embodiment is provided for connecting the induction coil 24 to the coil carrier 26 of the induction cooking hob. The opening of the cuboid-shaped spring portion 14 is aligned on the coil carrier 26. The snap-fit portion 12 is penetrable into the cut-out of the induction coil 24. Preferably, said cut-out is rectangular. The groove 16 is engaged or engageable with the cut-out of the induction coil 24.

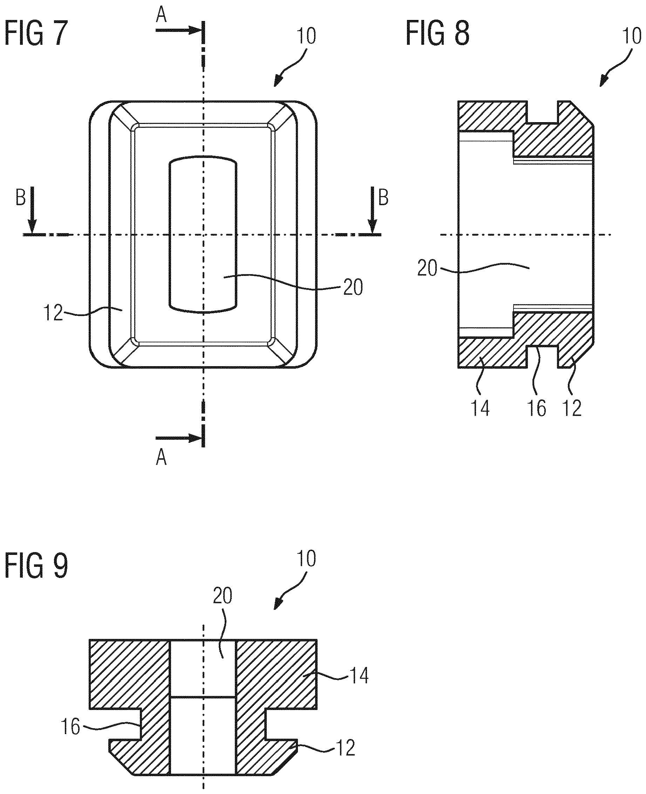

FIG 7 illustrates a schematic bottom view of the connecting element 10 according to the second embodiment of the present invention. FIG 7 clarifies the cross-section of the through hole 20 and the structure of the spring portion 14.

FIG 8 and FIG 9 illustrate schematic sectionals views of the connecting element 10 according to the second embodiment of the present invention. FIG 8 and FIG 9 clarify the shapes of the snap-fit portion 12, the spring portion 14 and the groove 16. The snap-fit portion 12 forms the truncated pyramid. The groove 16 extends between said snap-fit portion 12 and spring portion 14 and encloses completely the connecting element 10. The groove 16 extends perpendicular to the axis of the through hole 20.

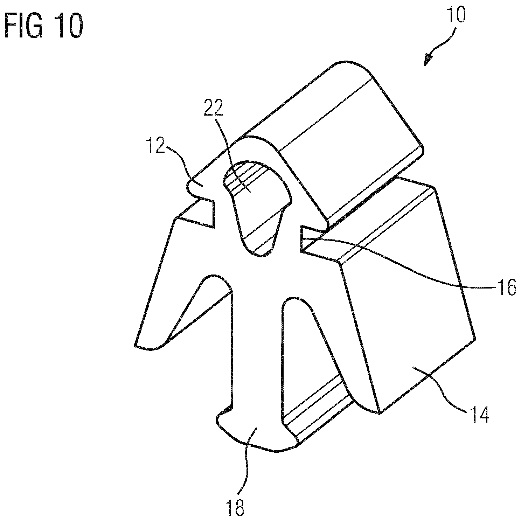

FIG 10 illustrates a schematic perspective view of the connecting element 10 according to a third embodiment of the present invention. The connecting element 10 is also made of an elastic material, preferably silicone or rubber.

The connecting element 10 of the third embodiment has the shape of a profile section. The cross-section of said connecting element 10 along a profile axis is constant. The connecting element 10 includes the snap-fit portion 12 and the spring portion 14. The snap-fit portion 12 is substantially formed as a prism extending along the profile axis. The width of the snap-fit portion 12 decreases with the distance from the spring portion 14. The spring portion 14 includes two wings arranged at opposite sides. Said wings extend outwards and away from the snap-fit portion 12. Two grooves 16 are formed between the snap-fit portion 12 and the spring portion 14. Said grooves 16 extend parallel to each other and are arranged at opposite sides. The grooves 16 extend parallel to the profile axis. Each groove 16 is arranged between the snap-fit portion 12 and one wing of the spring portion 14.

Additionally, the connecting element 10 includes a further snap-fit portion 18 arranged opposite to the snap-fit portion 12. Moreover, the snap-fit portion 12 includes a clearance hole 22 extending along the profile axis. Thus, the snap-fit portion 12 is a flexible hose with a triangular cross-section.

The connecting element 10 is provided for connecting the induction coil 24 to the coil carrier 26 of the induction cooking hob, wherein the distal ends of the wings of the spring portion 14 are aligned on the coil carrier 26. The snap-fit portion 12 is penetrable into the cut-out of the induction coil 24. Preferably, said cut-out is rectangular. For example, the cut-out may be formed in the aluminium sheet of the induction coil 24. The grooves 16 of the connecting element 10 are engaged or engageable with the cut-out of the induction coil 24. The further snap-fit portion 18 is penetrable into a cut-out of the coil carrier 24. Preferably, said cut-out is rectangular.

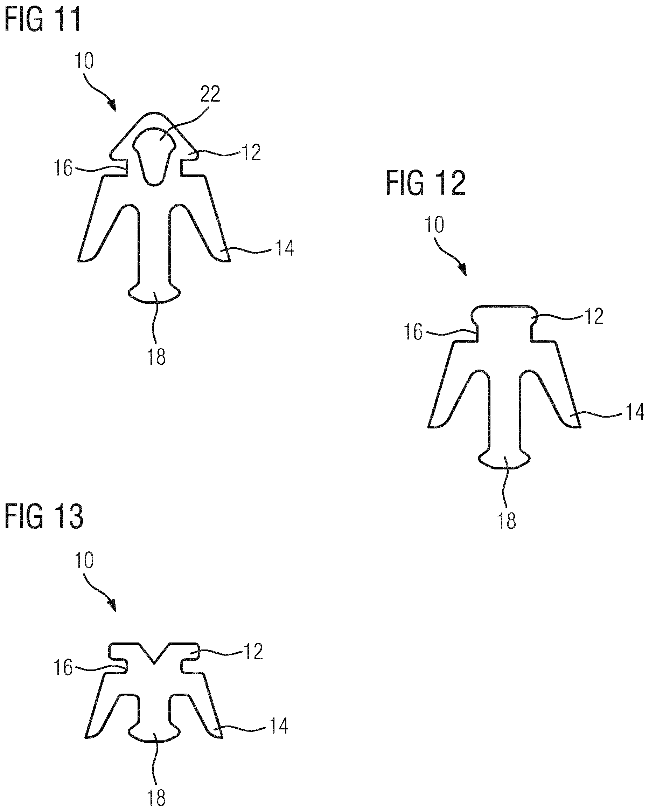

FIG 11 illustrates a schematic front view of the connecting element 10 according to the third embodiment of the present invention. FIG 11 clarifies the cross-section of the connecting element 10 of the third embodiment. The snap-fit portion 12 is hollow and hence easily deformable. Thus, the snap-fit portion 12 can be inserted into the cut-out of the induction coil 24 by little effort.

FIG 12 illustrates a schematic front view of the connecting element 10 according to a fourth embodiment of the present invention. Also, the connecting element 10 of the fourth embodiment has the shape of a profile section.

The connecting element 10 includes the snap-fit portion 12 and the spring portion 14. The snap-fit portion 12 is substantially formed as a cuboid extending along the profile axis. The spring portion 14 includes two wings arranged at opposite sides. Said wings extend outwards and away from the snap-fit portion 12. Two grooves 16 are formed between the snap-fit portion 12 and the spring portion 14. The grooves 16 extend parallel to each other and are arranged at opposite sides. The grooves 16 extend along the profile axis. Each groove 16 is arranged between the snap-fit portion 12 and one wing of the spring portion 14. The connecting element 10 includes the further snap-fit portion 18 arranged opposite to the snap-fit portion 12. The further snap-fit portion 18 is penetrable into the cut-out of the coil carrier 24.

FIG 13 illustrates a schematic front view of the connecting element 10 according to a fifth embodiment of the present invention. The connecting element 10 of the fifth embodiment also has the shape of a profile section.

The connecting element 10 includes the snap-fit portion 12, the spring portion 14, the grooves 16 and the further snap-fit portion 12. The snap-fit portion 12 is substantially formed as a cuboid extending along the profile axis. The spring portion 14 includes two wings arranged at opposite sides. Said wings extend outwards and away from the snap-fit portion 12. Two grooves 16 are formed between the snap-fit portion 12 and the spring portion 14. The grooves 16 extend parallel to each other and are arranged at opposite sides. The grooves 16 extend along the profile axis. Each groove 16 is arranged between the snap-fit portion 12 and one wing of the spring portion 14. The connecting element 10 includes the further snap-fit portion 18 arranged opposite to the snap-fit portion 12, wherein said further snap-fit portion 18 is penetrable into the cut-out of the coil carrier 24.

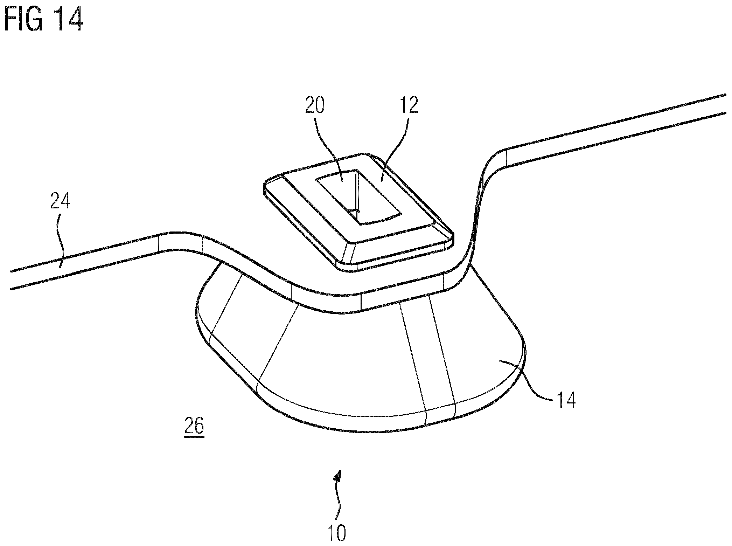

FIG 14 illustrates a schematic perspective view of the connecting element 10 interconnected between an induction coil 24 and a coil carrier 26 according to the first embodiment of the present invention.

The induction coil 24 is arranged above the coil carrier 26. The connecting element 10 is arranged between the induction coil 24 and the coil carrier 26. The connecting element 10 penetrates the induction coil 24, wherein the snap-fit portion 12 of said connecting element 10 is arranged above the induction coil 24. The spring portion 14 of the connecting element 10 is arranged between the induction coil 24 and the coil carrier 26. The groove 16 of the connecting element 10 engages with the cut-out in the induction coil 24. For example, the cut-out of the induction coil 24 is formed in an aluminium disk of said induction coil 24. The spring portion 14 of the connecting element 10 is supported by the coil carrier 26.

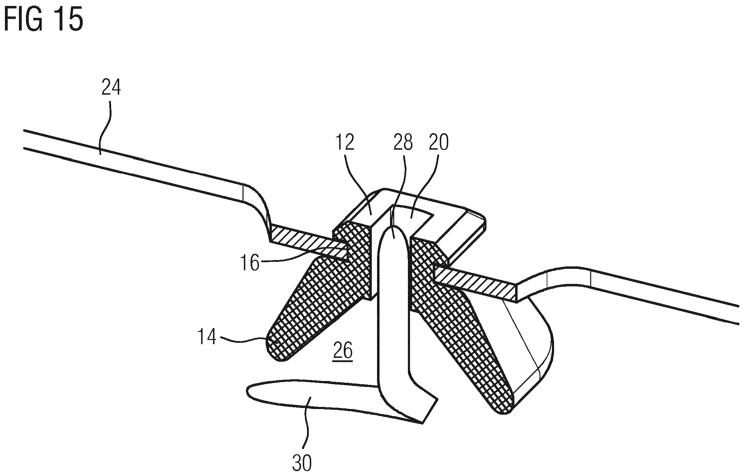

FIG 15 illustrates a schematic perspective sectional view of the connecting element 10 interconnected between the induction coil 24 and the coil carrier 26 according to the first embodiment of the present invention. At least one connecting element 10 is provided for connecting the induction coil 24 to the coil carrier 26. For example, three connecting elements 10 are provided for connecting the induction coil 24 to the coil carrier 26.

The snap-fit portion 12 of the connecting element 10 is arranged above the induction coil 24, while the spring portion 14 of the connecting element 10 is arranged beneath said induction coil 24 and above the coil carrier 26. The groove 16 of the connecting element 10 engages with the cut-out in the induction coil 24. The spring element 14 of the connecting element 10 is supported by the coil carrier 26.

A bent sheet metal finger 28 of the coil carrier 26 penetrates the through hole 20 of the connecting element 10. A resulting cutting 30 from preparing the bent sheet metal finger 28 remains in the coil carrier 26. Said cutting 30 is arranged beneath the spring element 14 of the induction coil 24. The bent sheet metal finger 28 of the coil carrier 26 extends vertically upwards. The connection between the bent sheet metal finger 28 and the through hole 20 effects that the connecting element 10 cannot be displaced parallel to the coil carrier 26.

The snap-fit portion 12 of the connecting element 10 and the cut-out in the induction coil 24 form a snap-in mechanism, so that the connecting element 10 and the induction coil 24 are fixed to each other. The connection of the bent sheet metal finger 28 and the through hole 20 guarantee the correct placement of the induction coil 24 and the connecting element 10 on the coil carrier 26. Further, the connecting element 10 acts as a spacer and avoids that the metallic induction coil 24 and the metallic coil carrier 26 enter in contact. Moreover, the spring portion 14 of the connecting element 10 pushes the induction coil 24 towards against a cooking panel arranged on the top side of the induction cooking hob.

The connecting elements 10 of the first and second embodiments do not require any steel spring elements because of the spring portion 14. The connecting elements 10 of the first and second embodiments do not require any space beneath the coil carrier 26. The connecting elements 10 of the first and second embodiments may be for already existing induction coils 24 and coil carriers 26.

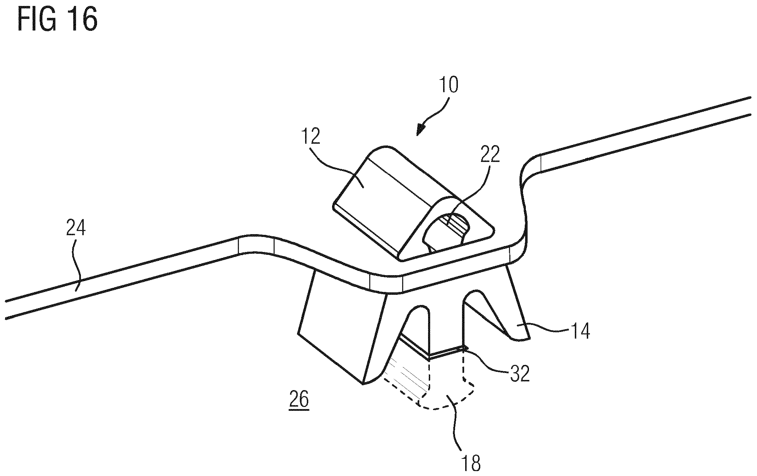

FIG 16 illustrates a schematic perspective view of the connecting element 10 interconnected between the induction coil 24 and the coil carrier 26 according to the third embodiment of the present invention.

The induction coil 24 is arranged above the coil carrier 26. The connecting element 10 is fastened at the induction coil 24 and at the coil carrier 26. The connecting element 10 is penetrated in the induction coil 24, wherein the snap-fit portion 12 of said connecting element 10 is arranged above the induction coil 24. The spring portion 14 of the connecting element 10 is arranged between the induction coil 24 and the coil carrier 26. The grooves 16 of the connecting element 10 engage with the cut-out in the induction coil 24. For example, the cut-out of the induction coil 24 is formed in an aluminium disk of said induction coil 24. The distal ends of the wings of the spring portion 14 are supported by the coil carrier 26. The further snap-fit portion 18 of the connecting element 10 penetrates the cut-out 32 in the coil carrier 26.

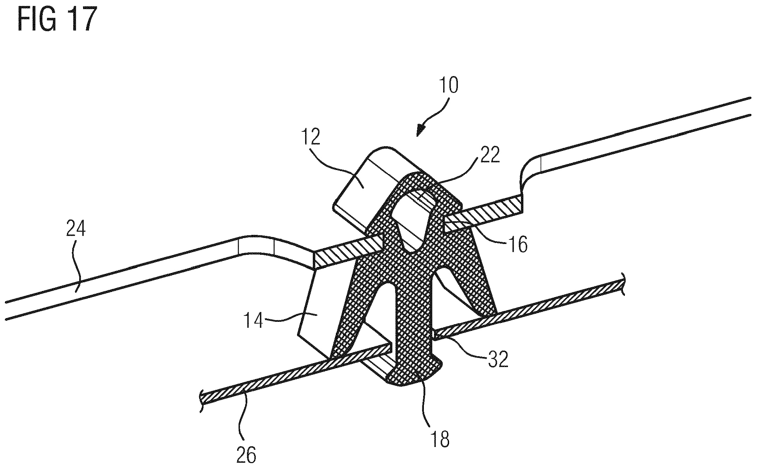

FIG 17 illustrates a schematic perspective sectional view of the connecting element 10 interconnected between the induction coil 24 and the coil carrier 26 according to the third embodiment of the present invention. At least one connecting element 10 is provided for connecting the induction coil 24 to the coil carrier 26. For example, three connecting elements 10 are provided for connecting the induction coil 24 to the coil carrier 26.

The connecting element 10 is fastened at the induction coil 24 and at the coil carrier 26. The snap-fit portion 12 of said connecting element 10 is fastened above the induction coil 24, while the spring portion 14 of the connecting element 10 is arranged between the induction coil 24 and the coil carrier 26. The grooves 16 of the connecting element 10 engage with the cut-out in the induction coil 24. The distal ends of the wings of the spring portion 14 are supported by the coil carrier 26. The further snap-fit portion 18 of the connecting element 10 penetrates the cut-out 32 in the coil carrier 26.

The connecting elements 10 of the third to fifth embodiments allow the fastening of said connecting elements 10 on the coil carrier 26 without the bent sheet metal fingers 28. The cut-out 32 in the coil carrier 26 is sufficient for fixing the connecting element 10 by the further snap-fit portion 18. The concept of the cut-outs 32 in the coil carrier 26 allows a modular coil carrier 26. A plurality of arrangements of cut-out 32 in the coil carrier 26 allows that one coil carrier 26 is provided for different induction cooking hobs.

The snap-fit portion 12 and the further snap-fit portion 18 of the connecting element 10 allow an automatic assembling of the induction coil 24 on the coil carrier 26 by an assembling line. The connecting element 10 with the snap-fit portion 12 and the further snap-fit portion 18 allows the assembling of the induction coil 24 on the coil carrier 26 by a robot. The snap-fit portion 12 and the cut-out in the induction coil 24 form the snap-in mechanism between the induction coil 24 and the connecting element 10, while the further snap-fit portion 18 and the cut-out 32 in the coil carrier 26 form a snap-in mechanism between the coil carrier 26 and the connecting element 10.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention. All such changes and modifications are intended to be included within the scope of the invention as defined by the appended claims.

### List of reference numerals

- 10: connecting element
- 12: snap-fit portion
- 14: spring portion
- 16: groove
- 18: further snap-fit portion
- 20: through hole
- 22: clearance hole
- 24: heating energy generating element / induction coil
- 26: carrier element / coil carrier
- 28: bent sheet metal finger
- 30: cutting
- 32: cut-out

## Claims

1. A connecting element (10) for connecting a heating energy generating element (24) to a carrier element (26) of a cooking hob, wherein the connecting element (10) includes an engagement portion (12) connectable to a receiving portion of the heating energy generating element (24) and/or the carrier element (26), and wherein the connecting element (10) includes a spring portion (14) arrangeable between the heating energy generating element (24) and the carrier element (26), so that the spring portion (14) provides a distance between the heating energy generating element (24) and the carrier element (26),
**characterised in that**
the spring portion (14) is funnel-shaped, wherein the diameter of the funnel-shaped spring portion (14) increases with the distances from the engagement portion (12).

2. The connecting element according to claim 1,
**characterised in that**
the engagement portion (12) is a snap-fit portion (12) and/or the receiving portion is a cut-out,
wherein preferably the snap-fit portion (12) and the cut-out form a snap-in mechanism.

3. The connecting element according to any one of the preceding claims,
**characterised in that**
the connecting element (10) includes at least one groove (16) enclosing at least partially the connecting element (10), wherein preferably the at least one groove (16) is arranged between the engagement portion (12) and the spring portion (14).

4. The connecting element according to any one of the preceding claims,
**characterised in that**
the groove (16) is engageable with the receiving portion of the heating energy generating element (24), in particular with the cut-out of the heating energy generating element (24) .

5. The connecting element according to claim 3 or 4 as related back to claim 2,
**characterised in that**
the diameter of the funnel-shaped spring portion (14) increases with the distances from the snap-fit portion (12) and the groove (16).

6. The connecting element according to any one of the preceding claims,
**characterised in that**
the engagement portion (12), e.g. the snap-fit portion (12), is formed as a truncated pyramid.

7. The connecting element according to any one of the preceding claims,
**characterised in that**
the connecting element (10) includes at least one through hole (20), wherein the axis of said through hole (20) extends perpendicular to the groove (16), and wherein preferably the through hole (20) is adapted for receiving an element (28) of the carrier element (26), in particular an elongated element (28) of the carrier element (26) extending perpendicular to a plane of said carrier element (26).

8. The connecting element according to any one of the claims 1 to 7,
**characterised in that**
the connecting element (10) includes a further engagement portion (18) extending opposite to the engagement portion (12), wherein preferably said further engagement portion (18) is connectable to a receiving portion (32) of the carrier element (26).

9. The connecting element according to claim 8,
**characterised in that**
the further engagement portion (18) is a further snap-fit portion (18), while the receiving portion (32) of the carrier element (26) is a cut-out (32), so that the further snap-fit portion (18) and the cut-out (32) form a snap-in mechanism.

10. A cooking hob with at least one heating energy generating element (24) and at least one carrier element (26), in particular an induction cooking hob with at least one induction coil (24) and at least one coil carrier (26),
**characterised in that**
the cooking hob comprises at least one connecting element (10) according to any one of the preceding claims.

11. The cooking hob according to claim 10,
**characterised in that**
the heating energy generating element (24) includes a plurality of receiving portions, e.g. cut-outs, adapted for receiving the engagement portion, e.g. snap-fit portion (12), wherein said receiving portion is engaged or engageable with the groove (16).

12. The cooking hob according to claim 10 or 11,
**characterised in that**
the carrier element (26) includes a plurality of receiving portions, e.g. cut-outs (32), adapted for receiving the further engagement portion (18), e.g. the further snap-fit portion (18).

13. The cooking hob according to any one of the claims 10 to 12,
**characterised in that**
the carrier element (26) includes a plurality of bent sheet metal fingers (28), wherein said bent sheet metal fingers (28) are penetrable into or penetrates the through hole (20) of the connecting element (10).

14. The cooking hob according to any one of the claims 10 to 13,
**characterised in that**
the cooking hob comprises at least one, preferably at least three connecting elements (10) per cooking hob, per heating energy generating element (24) and/or per carrier element (26) .

15. The cooking hob according to any one of the claims 10 to 14,
**characterised in that**
the cooking hob comprises one heating energy generating element (24) per carrier element (26), wherein preferably each carrier element (26) includes three connecting elements (10) .

16. The cooking hob according to any one of the claims 10 to 15,
**characterised in that**
the cooking hob comprises two heating energy generating elements (24) per carrier element (26), wherein preferably each carrier element (26) includes four connecting elements (10).

## Patentansprüche

1. Verbindungselement (10) zum Verbinden eines Heizenergie-Erzeugungselements (24) mit einem Trägerelement (26) eines Kochfelds, wobei das Verbindungselement (10) einen Eingriffabschnitt (12) enthält, der mit einem Aufnahmeabschnitt des Heizenergie-Erzeugungselements (24) und/oder dem Trägerelement (26) verbunden werden kann, und wobei das Verbindungselement (10) einen Federabschnitt (14) enthält, der zwischen dem Heizenergie-Erzeugungselement (24) und dem Trägerelement (26) angeordnet werden kann, so dass der Federabschnitt (14) einen Abstand zwischen dem Heizenergie-Erzeugungselement (24) und dem Trägerelement (26) bereitstellt,
**dadurch gekennzeichnet, dass**
der Federabschnitt (14) trichterförmig ist, wobei der Durchmesser des trichterförmigen Federabschnitts (14) mit den Entfernungen von dem Eingriffabschnitt (12) zunimmt.

2. Verbindungselement nach Anspruch 1,
**dadurch gekennzeichnet, dass**
der Eingriffabschnitt (12) ein Schnappverbindungsabschnitt (12) ist und/oder der Aufnahmeabschnitt ein Ausschnitt ist,
wobei der Schnappverbindungsabschnitt (12) und der Ausschnitt vorzugsweise einen Einrastmechanismus bilden.

3. Verbindungselement nach einem der vorhergehenden Ansprüche,
**dadurch gekennzeichnet, dass**
das Verbindungselement (10) mindestens eine Nut (16) enthält, die zumindest teilweise das Verbindungselement (10) umschließt, wobei die mindestens eine Nut (16) vorzugsweise zwischen dem Eingriffabschnitt (12) und dem Federabschnitt (14) angeordnet ist.

4. Verbindungselement nach einem der vorhergehenden Ansprüche,
**dadurch gekennzeichnet, dass**
die Nut (16) mit dem Aufnahmeabschnitt des Heizenergie-Erzeugungselements (24), insbesondere mit dem Ausschnitt des Heizenergie-Erzeugungselements (24), in Eingriff gebracht werden kann.

5. Verbindungselement nach Anspruch 3 oder 4, wie zurückbezogen auf Anspruch 2,
**dadurch gekennzeichnet, dass**
der Durchmesser des trichterförmigen Federabschnitts (14) mit den Entfernungen von dem Schnappverbindungsabschnitt (12) und der Nut (16) zunimmt.

6. Verbindungselement nach einem der vorhergehenden Ansprüche,
**dadurch gekennzeichnet, dass**
der Eingriffabschnitt (12), z. B. der Schnappverbindungsabschnitt (12), als ein Pyramidenstumpf gebildet ist.

7. Verbindungselement nach einem der vorhergehenden Ansprüche,
**dadurch gekennzeichnet, dass**
das Verbindungselement (10) mindestens ein Durchgangsloch (20) besitzt, wobei sich die Achse des Durchgangslochs (20) senkrecht zu der Nut (16) erstreckt und wobei das Durchgangsloch (20) vorzugsweise dafür ausgelegt ist, ein Element (28) des Trägerelements (26), insbesondere ein längliches Element (28) des Trägerelements (26), das sich senkrecht zu einer Ebene des Trägerelements (26) erstreckt, aufzunehmen.

8. Verbindungselement nach einem der Ansprüche 1 bis 7,
**dadurch gekennzeichnet, dass**
das Verbindungselement (10) einen weiteren Eingriffabschnitt (18) enthält, der sich gegenüber dem Eingriffabschnitt (12) erstreckt, wobei der weitere Eingriffabschnitt (18) vorzugsweise mit einem Aufnahmeabschnitt (32) des Trägerelements (26) verbunden werden kann.

9. Verbindungselement nach Anspruch 8,
**dadurch gekennzeichnet, dass**
der weitere Eingriffabschnitt (18) ein weiterer Schnappverbindungsabschnitt (18) ist, während der Aufnahmeabschnitt (32) des Trägerelements (26) ein Ausschnitt (32) ist, so dass der weitere Schnappverbindungsabschnitt (18) und der Ausschnitt (32) einen Einrastmechanismus bilden.

10. Kochfeld mit mindestens einem Heizenergie-Erzeugungselement (24) und mindestens einem Trägerelement (26), insbesondere ein Induktionskochfeld mit mindestens einer Induktionsspule (24) und mindestens einem Spulenträger (26),
**dadurch gekennzeichnet, dass**
das Kochfeld mindestens ein Verbindungselement (10) nach einem der vorhergehenden Ansprüche enthält.

11. Kochfeld nach Anspruch 10,
**dadurch gekennzeichnet, dass**
das Heizenergie-Erzeugungselement (24) mehrere Aufnahmeabschnitte, z. B. Ausschnitte enthält, die dafür ausgelegt sind, den Eingriffabschnitt, z. B. den Schnappverbindungsabschnitt (12), aufzunehmen, wobei der Aufnahmeabschnitt mit der Nut (16) in Eingriff ist oder in Eingriff gebracht werden kann.

12. Kochfeld nach Anspruch 10 oder 11,
**dadurch gekennzeichnet, dass**
das Trägerelement (26) mehrere Aufnahmeabschnitte, z. B. Ausschnitte (32), enthält, die dafür ausgelegt sind, den weiteren Eingriffabschnitt (18), z. B. den weiteren Schnappverbindungsabschnitt (18), aufzunehmen.

13. Kochfeld nach einem der Ansprüche 10 bis 12,
**dadurch gekennzeichnet, dass**
das Trägerelement (26) mehrere Finger (28) aus gebogenem Blech enthält, wobei die Finger (28) aus gebogenem Blech in das Durchgangsloch (20) des Verbindungselements (10) eindringen können oder darin eindringen.

14. Kochfeld nach einem der Ansprüche 10 bis 13,
**dadurch gekennzeichnet, dass**
das Kochfeld mindestens ein, vorzugsweise mindestens drei Verbindungselemente (10) pro Kochfeld, pro Heizenergie-Erzeugungselement (24) und/oder pro Trägerelement (26) enthält.

15. Kochfeld nach einem der Ansprüche 10 bis 14,
**dadurch gekennzeichnet, dass**
das Kochfeld ein Heizenergie-Erzeugungselement (24) pro Trägerelement (26) umfasst, wobei jedes Trägerelement (26) vorzugsweise drei Verbindungselemente (10) enthält.

16. Kochfeld nach einem der Ansprüche 10 bis 15,
**dadurch gekennzeichnet, dass**
das Kochfeld zwei Heizenergie-Erzeugungselemente (24) pro Trägerelement (26) umfasst, wobei jedes Trägerelement (26) vorzugsweise vier Verbindungselemente (10) enthält.

## Revendications

1. Élément connecteur (10) pour connecter un élément générateur d'énergie de chauffage (24) à un élément porteur (26) d'une plaque de cuisson, l'élément connecteur (10) comportant une partie d'entrée en prise (12) connectable à une partie réceptrice de l'élément générateur d'énergie de chauffage (24) et/ou de l'élément porteur (26), et l'élément connecteur (10) comportant une partie ressort (14) agençable entre l'élément générateur d'énergie de chauffage (24) et l'élément porteur (26), de telle manière que la partie ressort (14) ménage une distance entre l'élément générateur d'énergie de chauffage (24) et l'élément porteur (26),
**caractérisé en ce que**
la partie ressort (14) est en forme d'entonnoir, le diamètre de la partie ressort en forme d'entonnoir (14) augmentant en fonction des distances par rapport à la partie d'entrée en prise (12).

2. Élément connecteur selon la revendication 1,
**caractérisé en ce que**
la partie d'entrée en prise (12) est une partie encliquetable (12) et/ou la partie réceptrice est une découpe,
de préférence la partie encliquetable (12) et la découpe formant un mécanisme s'encliquetant.

3. Élément connecteur selon l'une quelconque des revendications précédentes,
**caractérisé en ce que**
l'élément connecteur (10) comporte au moins une rainure (16) entourant au moins partiellement l'élément connecteur (10), de préférence l'au moins une rainure (16) étant agencée entre la partie d'entrée en prise (12) et la partie ressort (14).

4. Élément connecteur selon l'une quelconque des revendications précédentes,
**caractérisé en ce que**
la rainure (16) est propre à entrer en prise avec la partie réceptrice de l'élément générateur d'énergie de chauffage (24), plus particulièrement avec la découpe de l'élément générateur d'énergie de chauffage (24) .

5. Élément connecteur selon la revendication 3 ou 4 lorsqu'elle dépend de la revendication 2,
**caractérisé en ce que**
le diamètre de la partie ressort en forme d'entonnoir (14) augmente en fonction des distances par rapport à la partie encliquetable (12) et la rainure (16).

6. Élément connecteur selon l'une quelconque des revendications précédentes,
**caractérisé en ce que**
la partie d'entrée en prise (12), par ex. la partie encliquetable (12), prend la forme d'une pyramide tronquée.

7. Élément connecteur selon l'une quelconque des revendications précédentes,
**caractérisé en ce que**
l'élément connecteur (10) comporte au moins un trou traversant (20), l'axe dudit trou traversant (20) s'étendant perpendiculairement à la rainure (16), et de préférence le trou traversant (20) étant adapté à recevoir un élément (28) de l'élément porteur (26), plus particulièrement un élément allongé (28) de l'élément porteur (26) s'étendant perpendiculairement à un plan dudit élément porteur (26).

8. Élément connecteur selon l'une quelconque des revendications 1 à 7,
**caractérisé en ce que**
l'élément connecteur (10) comporte une partie d'entrée en prise supplémentaire (18) s'étendant à l'opposé de la partie d'entrée en prise (12), de préférence ladite partie d'entrée en prise supplémentaire (18) étant connectable à une partie réceptrice (32) de l'élément porteur (26).

9. Élément connecteur selon la revendication 8,
**caractérisé en ce que**
la partie d'entrée en prise supplémentaire (18) est une partie encliquetable supplémentaire (18) tandis que la partie réceptrice (32) de l'élément porteur (26) est une découpe, de telle manière que la partie d'entrée en prise supplémentaire (18) et la découpe (32) forment un mécanisme s'encliquetant.

10. Plaque de cuisson dotée d'au moins un élément générateur d'énergie de chauffage (24) et d'au moins un élément porteur (26), plus particulièrement plaque de cuisson à induction doté d'au moins une bobine d'induction (24) et d'au moins un porte-bobine (26),
**caractérisée en ce que**
la plaque de cuisson comprend au moins un élément connecteur (10) selon l'une quelconque des revendications précédentes.

11. Plaque de cuisson selon la revendication 10,
**caractérisée en ce que**
l'élément générateur d'énergie de chauffage (24) comporte une pluralité de parties réceptrices, par ex. de découpes, adaptées à recevoir la partie d'entrée en prise, par ex. la partie encliquetable (12), ladite partie réceptrice entrant en prise ou étant propre à entrer en prise avec la rainure (16).

12. Plaque de cuisson selon la revendication 10 ou 11,
**caractérisée en ce que**
l'élément porteur (26) comporte une pluralité de parties réceptrices, par ex. de découpes (32), adaptées à recevoir la partie d'entrée en prise supplémentaire (18), par ex. la partie encliquetable supplémentaire (18).

13. Plaque de cuisson selon l'une quelconque des revendications 10 à 12,
**caractérisée en ce que**
l'élément porteur (26) comporte une pluralité de doigts en tôle pliés (28), lesdits doigts en tôle pliés (28) étant propres à pénétrer ou pénétrant dans le trou traversant (20) de l'élément connecteur (10).

14. Plaque de cuisson selon l'une quelconque des revendications 10 à 13,
**caractérisée en ce que**
la plaque de cuisson comprend au moins un, de préférence au moins trois éléments connecteurs (10) par plaque de cuisson, par élément générateur d'énergie de chauffage (24) et/ou par élément porteur (26).

15. Plaque de cuisson selon l'une quelconque des revendications 10 à 14,
**caractérisée en ce que**
la plaque de cuisson comprend au moins un élément générateur d'énergie de chauffage (24) par élément porteur (26), de préférence chaque élément porteur (26) comportant trois éléments connecteurs (10).

16. Plaque de cuisson selon l'une quelconque des revendications 10 à 15,
**caractérisée en ce que**
la plaque de cuisson comprend deux éléments générateurs d'énergie de chauffage (24) par élément porteur (26), de préférence chaque élément porteur (26) comportant quatre éléments connecteurs (10).
